# EUROPEAN PATENT SPECIFICATION

(11) **EP 3 460 201 B1**
(45) Date of publication and mention of the grant of the patent: **18.12.2019**
(21) Application number: 18191688.3
(22) Date of filing: 30.08.2018
(51) Int. Cl.: F01D 25/28, F01D 17/16

(54) **VARIABLE STATOR VANE RIGGING**
VARIABLE LEITSCHAUFELAUFRÜSTUNG
GRÉEMENT D'AUBE DE STATOR VARIABLE

(30) Priority: 25.09.2017 GB 201715457
(43) Date of publication of application: 27.03.2019
(73) Proprietor: Rolls-Royce plc, London SW1E 6AT (GB)
(72) Inventor: Lyon, Owen, Derby, Derbyshire DE24 8BJ (GB); Swann, Andrew, Derby, Derbyshire DE24 8BJ (GB)
(74) Representative: Rolls-Royce plc

(56) References cited:
- EP-A1- 2 949 878
- EP-A2- 1 387 041
- EP-A2- 2 420 653
- WO-A1-2013/192063
- US-A- 3 314 595
- US-A- 5 190 439
- US-A- 5 549 448

## Description

This disclosure relates to a variable stator vane such as a variable inlet guide vane.

In a gas turbine engine having a multi-stage axial compressor, the rotor is turned at high speed so that air is continuously induced into the compressor, accelerated by the rotating blades and swept rearwards onto an adjacent row of stator vanes. Each rotor-stator stage increases the pressure of the air passing through the stage and at the final stage of a multistage compressor the air pressure may be many times that of the inlet air pressure.

In addition to converting the kinetic energy of the air into pressure, the stator vanes also serve to correct the deflection given to the air by the rotor blades and to present the air at the correct angle to the next stage of rotor blades.

As compressor pressure ratios have increased it has become more difficult to ensure that the compressor will operate efficiently over the operational speed range of the engine. This is because the inlet to exit area ratios of the stator vanes required for high pressure operation can result in aerodynamic inefficiency and flow separation at low operational speeds and pressures.

In applications where high pressure ratios are required, for example across a single compressor spool, the above problem may be overcome by using variable stator vanes. Variable stator vanes permit the angle of incidence of the exiting air onto the rotor blades to be corrected to angles which the rotor blades can tolerate without flow separation.

The use of variable stator vanes permits the angle of one or more rows of stator vanes in a compressor to be adjusted, while the engine is running, for example in accordance with the rotational speed and/or mass flow of the compressor.

The term variable inlet guide vane (VIGV) used herein refers specifically to vanes in the row of variable vanes at the entry to a compressor. The term variable stator vane (VSV) used herein refers generally to the vanes in the one or more rows of variable vanes in the compressor which may include a VIGV row. A function of such VIGVs or VSVs may be to improve the aerodynamic stability of the compressor when it is operating at relatively low rotational speeds at off-design, i.e. non-optimum speed, conditions.

At low speed and mass flow conditions, the variable vanes may be considered to be in a "closed" position, directing and turning the airflow in the direction of rotation of the rotor blades immediately downstream. This reduces the angle of incidence at entry to the blades and hence the tendency of them to stall. As the rotational speed and/or mass flow of the compressor increases, for example with increasing engine power, the vanes may be moved progressively and in unison towards what may be considered to be an "open" position.

The movement is controlled such that the flow angle of the air leaving the stator vanes continues to provide an acceptable angle of incidence at entry to the downstream row of rotor blades. When the vanes are in the fully "open" position, the angles of all of the stator vanes and rotor blades will typically match the aerodynamic condition at which the compressor has been designed i.e. its "design point".

In order to adjust the angle of incidence of the VSVs, a variable vane mechanism may be provided in which linear movement of an actuator turns a ring (which may be referred to as a unison ring) which encircles the engine. This ring is linked to the vanes via levers and pins. Hence as the actuator moves, its linear motion translates into turning of the vanes about their longitudinal axis, thereby changing their angle of incidence.

During set-up of the VSV, it is necessary to calibrate the position of the vanes to the position of the actuator. Previous arrangements for calibrating the vane position and the actuator position have proved not to provide sufficient adjustment in setting the relationship between the actuator position and the vane position.

Furthermore, it may be desirable to check and/or adjust the position of the vanes relative to the actuator after a certain period of use, because the relative positions may either drift from that which was originally set, or may benefit from adjustment after a period of use, for example due to component wear.

Document D1 (US 3314595 A1) discloses a method of rigging and an actuator for controlling the angle of incidence of a set of stator vanes according to the state of the art. WO 2013/192063 relates to an actuation system for a bleed valve that includes first and second bell cranks connected by a connecting link. The first bell crank has a first arm that is coupled to a bleed valve and a second arm that is coupled to the connecting link. The connecting link has a first end coupled to the second arm of the first bell crank and a second end coupled to a first arm of the second bell crank. A second arm of the second bell crank is coupled to an actuating element. Input is communicated through the actuating element to move the bleed valve between open and closed positions via the first and second bell cranks.

Thus, it would be desirable to be able to accurately calibrate and/or adjust the position of the vanes in a VSV stage, for example to allow accurate positioning relative to an actuator.

According to an aspect, there is provided a variable stator vane arrangement comprising:
an actuator comprising an actuator body and an actuator ram, the actuator ram being moveable relative to the actuator body along an actuator axis;
an array of variable stator vanes; and
an adjustable connecting arrangement that, once adjusted, fixedly connects the actuator ram to the variable stator vanes such that the angle of incidence of the variable stator vanes is dependent on the position of the actuator ram along the actuator axis, wherein:
   each of the actuator body and the actuator ram comprises at least one rigging hole, with at least one of the actuator body and the actuator ram comprising at least two rigging holes that are offset from each other in the direction of the actuator axis.

According to an aspect, there is provided a method of rigging such a variable stator vane arrangement for a gas turbine engine, the method comprising:
aligning an actuator ram rigging hole with an actuator body rigging hole;
inserting a rigging pin through the aligned actuator ram rigging hole and actuator body rigging hole so as to set a rigging position of the actuator ram;
setting the angle of incidence of the variable stator vanes to a rigging angle; and adjusting (which may include fixing) the adjustable connecting arrangement so as to fixedly connect the actuator ram at the rigging position to the variable stator vanes at the rigging angle.

According to an aspect, there is provided a method of assembling a variable stator vane stage of a gas turbine engine comprising:
providing an actuator, array of variable stator vanes, and adjustable connecting arrangement of any type described and/or claimed herein; and
performing any method of rigging the variable stator vane arrangement described and/or claimed herein.

According to an aspect, there is provided a method of manufacturing a gas turbine engine comprising a variable stator vane stage, the method comprising rigging the variable stator vanes using any method of rigging the variable stator vane arrangement described and/or claimed herein.

According to an aspect, there is provided an actuator for controlling the angle of incidence of a set of variable stator vanes, comprising:
an actuator body; and
an actuator ram, the actuator ram being moveable relative to the actuator body along an actuator axis, wherein:
   each of the actuator body and the actuator ram comprises at least one rigging hole; and
   at least one of the actuator body and the actuator ram comprises at least two rigging holes that are offset from each other in the direction of the actuator axis and are each capable of being aligned with the rigging hole(s) of the other of the actuator ram or actuator body so as to be able to insert a rigging pin (which may be referred to as an actuator rigging pin or simply a rigging pin) through the aligned holes to set the position of the actuator ram relative to the actuator body along the actuator axis.

According to an aspect, there is provided a variable stator vane arrangement comprising:
an array of variable stator vanes;
an actuator as described and/or claimed herein; and
an adjustable connecting arrangement that, once adjusted, fixedly connects the actuator ram to the variable stator vanes such that the angle of incidence of the variable stator vanes is dependent on the position of the actuator ram along the actuator axis.

The methods and apparatus provided herein allow the relationship between the actuator ram extension and vane incidence angle to be changed, or adjusted, during the rigging procedure. Accordingly, the rigging is adjustable.

The methods and apparatus provided herein may provide one or more of the following advantages:
- Facilitating the accommodation of design changes, for example change in aero schedule (which may mean a change in required vane incidence angle for a given engine condition, such as thrust and/or throttle position); and/or
- Enabling mal-schedule (for example where the vane is not taking a desired incidence angle for one or more conditions) to be addressed, for example if the angle errors are repeatable in magnitude and direction. Reducing mal-schedule may help to achieve optimum performance and operability; and/or
- Allowing the mechanism to be check for movement from its rigged position, for example after engine running or as a result of re-building the mechanism. If the mechanism has moved the selection of rigging holes to be aligned (for example to achieve a given vane angle) may allow the size and/or direction of the error to be determined; and/or
- Allowing additional data relating to the VSV mechanism characteristics to be determined and/or the design of the VSV mechanism to be verified over a wide range (or even the full) aero schedule, for example by comparing actuator extension (as set by the selected rigging holes) against measured vane angles.

At least two rigging holes (for example, 2, 3, 4, 5, 6, 7, 8, 9, 10 or more than 10) may be provided to the actuator ram. At least two rigging holes (for example, 2, 3, 4, 5, 6, 7, 8, 9, 10 or more than 10) may be provided to the actuator body.

Where the actuator ram is provided with at least two rigging holes, the actuator body may be provided with at least one (for example, one or more) rigging hole. Where the actuator body is provided with at least two rigging holes, the actuator ram may be provided with at least one (for example one or more) rigging hole.

The rigging hole(s) in the actuator ram may be offset (for example fixedly/non-adjustably offset) from the rigging hole(s) in the actuator body in a direction perpendicular to the actuator axis.

During the rigging process, the angle of incidence of the stator vanes may be fixed (or set) to a rigging angle using a vane rigging pin. For example, such a vane rigging pin may be inserted through/into a hole provided in a casing surrounding the stator vanes and a hole provided in a unison ring that is offset from the casing (for example radially offset relative to an engine axis, or casing axis) and used to transfer the linear movement of the actuator to the rotational movement of the VSVs in use.

The actuator rigging pin and (where present) the vane rigging pin may be removed after the VSV arrangement has been rigged.

The rigging holes in the at least one of the actuator body and the actuator ram that comprises at least two rigging holes may be circumferentially offset from each other relative to the actuator axis.

The rigging holes of the actuator body and actuator ram may be circumferentially moveable relative to each other about the actuator axis, for example in the step of aligning an actuator ram rigging hole with an actuator body rigging hole.

The respective centrelines of the rigging holes in the at least one of the actuator body and the actuator ram that comprises at least two rigging holes may be offset from each other in the direction of the actuator axis by any desired amount, for example by less than the width of the holes, less than half the width of the holes, less than a quarter of the width of the holes, or less than an eighth of the width of the holes.

The rigging holes may take any desired shape. For example, the rigging holes may be circular, in which case the width of the rigging holes may be the diameter.

The rigging hole(s) in the actuator body may be the same shape and/or size as the rigging hole(s) in the actuator ram. The rigging hole(s) in the actuator body may be substantially identical to the rigging hole(s) in the actuator ram.

The rigging hole or holes in one of the actuator ram or actuator body may be provided in the form of a rigging tool. Such a rigging tool may be removable from the actuator, for example an actuator body rigging tool that is removably attachable to the actuator body or actuator ram rigging tool that is removably attachable to the actuator ram. Such a rigging tool may extend circumferentially over at least a segment around the rigging axis, for example in the form of a rigging collar. Where a rigging tool is provided with one and only one rigging hole, the component to which the rigging tool is not provided would have more than one rigging hole. Where the rigging tool is provided with more than one rigging hole, the component to which the rigging tool is not provided may have one or more than one rigging hole.

The rigging hole or holes in one of the actuator ram or actuator body may be integral to the rest of the respective component, for example formed as part of and/or not removable from the respective actuator ram or actuator body.

Purely by way of example the rigging hole or holes in one of the actuator ram or actuator body may be integral to the rest of the respective component, whereas the rigging hole or holes in the other one of the actuator ram or actuator body may be provided in the form of a rigging tool, for example a removable rigging tool.

Again purely by way of example, the or each actuator ram rigging hole may be provided in the form of an actuator ram rigging tool, which may be an example of a rigging tool referred to elsewhere herein and thus may have any of the features and/or properties described in relation to the rigging tool.

Such an actuator ram rigging tool may be circumferentially moveable relative to the actuator ram about the actuator axis. The step of aligning an actuator ram rigging hole with an actuator body rigging hole may comprise moving the actuator ram rigging tool circumferentially about the actuator axis. Such circumferential movement (relative to the actuator axis) may circumferentially align an actuator ram rigging hole with an actuator body rigging hole. Axial alignment of an actuator body rigging hole may be provided by moving the actuator ram along the actuator axis.

In arrangements comprising an actuator ram rigging tool, one of the actuator ram rigging tool and the actuator ram may be provided with a circumferentially extending groove, and the other of the actuator ram rigging tool and the actuator ram may be provided with a circumferentially extending ridge that is received by the circumferentially extending groove.

In such an arrangement a step of aligning an actuator ram rigging hole with an actuator body rigging hole may comprise moving the circumferentially extending ridge within the circumferentially extending groove, meaning that the circumferentially extending ridge moves relative to the circumferentially extending groove, such that either one of the circumferentially extending ridge or the circumferentially extending groove may remain stationary. The relative movement may result from absolute movement of the actuator ram rigging tool.

Where more than one rigging hole is provided in the actuator ram rigging tool, each rigging hole may be offset from the circumferentially extending ridge or circumferentially extending groove by a different (known) amount to the other hole(s) in the direction of the actuator axis.

An actuator ram rigging tool may comprise at least two rigging holes. Each rigging hole may be circumferentially and axially offset from the others relative to the actuator axis.

As noted above, a rigging tool may be provided to the actuator body in the form of an actuator body rigging tool. Such an actuator body rigging tool may have corresponding features and/or arrangements to those described herein in relation to an actuator ram rigging tool, for example in terms of rigging hole arrangement and/or presence and/or function of a circumferentially extending ridge/groove.

Where a rigging tool is used, the rigging tool may be removed from the respective component (e.g. actuator ram or actuator body) to which it is attached after fixedly connecting the actuator ram to the variable stator vanes.

Where a rigging tool is used, the rigging tool may be connected and/or attached to its respective component (e.g. actuator ram or actuator body) at the start of a rigging process.

According to an aspect, there is provided a rigging tool for use in rigging a variable stator vane stage of a gas turbine engine, the rigging tool being as described and/or claimed herein.

The rigging tool may comprise a locating portion for removably locating the rigging tool onto an actuator (for example an actuator body or actuator ram) of a gas turbine engine.

The rigging tool may comprise at least one rigging hole that is capable of being aligned with at least one corresponding rigging hole on the actuator (for example on the other of the actuator body or actuator ram).

In such an arrangement, the locating portion may be arranged to allow the rigging tool to be moved relative to the rest of the actuator once it has been located onto the actuator, so as to enable at least two sets of rigging holes to be aligned, each set of holes corresponding to a different actuator position. In this regard, a set of holes may be defined as one hole on the rigging tool and one hole that is not part of the rigging tool, for example that is in a fixed position on the actuator.

A locating portion of a rigging tool may be a circumferentially extending groove or ridge arranged to be received by a corresponding circumferentially extending groove or ridge in an actuator ram of the actuator. The rigging tool may comprise at least two rigging holes, the centrelines of each of the rigging holes being offset by different distances from the circumferentially extending groove or ridge in the rigging tool. The centrelines of each of the rigging holes may be offset from each other in the direction of the circumferentially extending groove or ridge by at least the width of the rigging holes, for example.

The adjustable connecting arrangement referred to elsewhere herein may take any suitable form, for example any form that allows connection of the actuator to the VSVs for at least two different combinations (or sets) of aligned actuator body and actuator ram rigging holes.

Purely by way of example, the adjustable connecting arrangement may comprise an adjustable length control rod. The adjustable connecting arrangement may comprise a unison ring. The adjustable connecting arrangement may comprise a plurality of vane levers. Such an adjustable control rod may be connected between the actuator ram and the unison ring to convert linear movement of the actuator ram into rotational movement of the unison ring (for example rotational movement about an engine axis, which may be referred to as an axis around which the VSVs are arranged, or centred). A vane lever may be connected between the unison ring and each VSV to convert rotational movement of the unison ring into rotation of the VSV about a substantially perpendicular axis (which may be in a substantially radial direction relative to the engine axis and/or thereby adjust the angle of incidence of the VSV). The step of adjusting the adjustable connecting arrangement may comprise adjusting (which may be or may include setting) the length of the control rod such that subsequent movement of the actuator ram results in a change in incidence angle of the variable vanes. The step of adjusting the length of the adjustable length control rod may comprise, for example, changing the length of a control rod (for example using a thread adjuster) or selecting a particular fixed length control rod from a set of control rods of different lengths. The amount of change in incidence angle of the variable vanes for a given movement of the actuator ram may be pre-determined and/or recorded as a schedule.

Where reference is made herein to the angle of the stator vanes, this may mean the angle of incidence of the stator vanes and/or the angle between the camber line, for example at the leading edge or trailing edge, and an axial direction. Movement of the unison ring (for example in the circumferential direction) may directly result in a change in angle of the stator vanes, for example by rotation of each vane about a substantially radial and/or spanwise direction.

Where reference is made to rigging holes being aligned, this may mean that they have the same circumferential and axial position relative to the actuator axis, but may be radially separated. The terms axial, radial and circumferential as used in relation to the actuator and/or rigging holes are used relative to the actuator axis, unless otherwise stated as being with reference to an engine axis.

The rigging holes may be through holes (i.e. holes that extend through the component) or blind holes (i.e. holes that do not extend entirely through the component).

The skilled person will appreciate that except where mutually exclusive, a feature described in relation to any one of the above aspects may be applied to any other aspect. Furthermore except where mutually exclusive any feature described herein may be applied to any aspect and/or combined with any other feature described herein.

Embodiments will now be described by way of example only, with reference to the Figures, in which:
Figure 1 is a sectional side view of a gas turbine engine on accordance with the present disclosure;
Figure 2 is a perspective view showing part of a variable stator vane arrangement in accordance with an example of the present disclosure;
Figure 3 is another schematic view showing part of a variable stator vane arrangement in accordance with an example of the present disclosure;
Figure 4 is a close-up view of a rigging arrangement in accordance with an example of the present disclosure;
Figure 5 is a close-up view of a rigging tool of a rigging arrangement in accordance with an example of the present disclosure; and
Figure 6 shows a cross-section through the exemplary rigging arrangement of Figure 4.

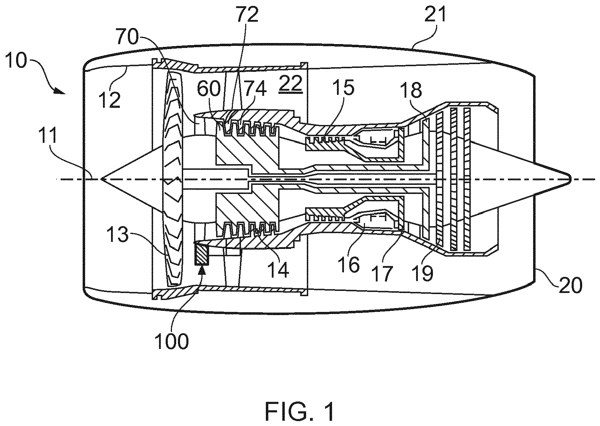

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

At least one of the compressors 14, 15 and the turbines 17, 18, 19 comprise stages having rotor blades in rotor blade rows (labelled 60 by way of example in relation to the intermediate pressure compressor in Figure 1) and stator vanes in stator vane rows (labelled 70, 72, 74 by way of example in relation to the intermediate pressure compressor in Figure 1).

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan. Further, the engine may not comprise a fan 13 and/or associated bypass duct 22 and/or nacelle 21. Whilst the described example relates to a turbofan engine, the disclosure may apply, for example, to any type of gas turbine engine, such as a turbojet or turboprop engine, for example.

Any one of the stator vane rows 70, 72, 74 in the gas turbine engine 10 may be a variable stator vane (VSV) row. Such a variable stator vane row 70, 72, 74 is part of a variable stator vane arrangement (which may be referred to as a variable vane arrangement) 100 that allows the angle of the vanes 70, 72, 74 (for example the angle of incidence of the vanes 70) to be adjusted in use. Purely by way of example, the gas turbine engine 10 shown in Figure 1 has a VSV row at the inlet to the core of the engine in the form of a variable inlet guide vane (VIGV) row 70. The gas turbine engine 10 shown by way of example in Figure 1 also has further VSV rows 72, 74 axially downstream of the VIGV row 70. It will be appreciated that a gas turbine engine in accordance with the present disclosure may comprise any desired number of VSV rows 70, 72, 74, which may be a part of one or more variable vane arrangements 100. Purely by way of example, the VSV row labelled 70 in Figure 1 (which, as noted above, may be known as a variable inlet guide vane (VIGV)) may be provided with a dedicated variable vane arrangement 100, including its own actuator(s).

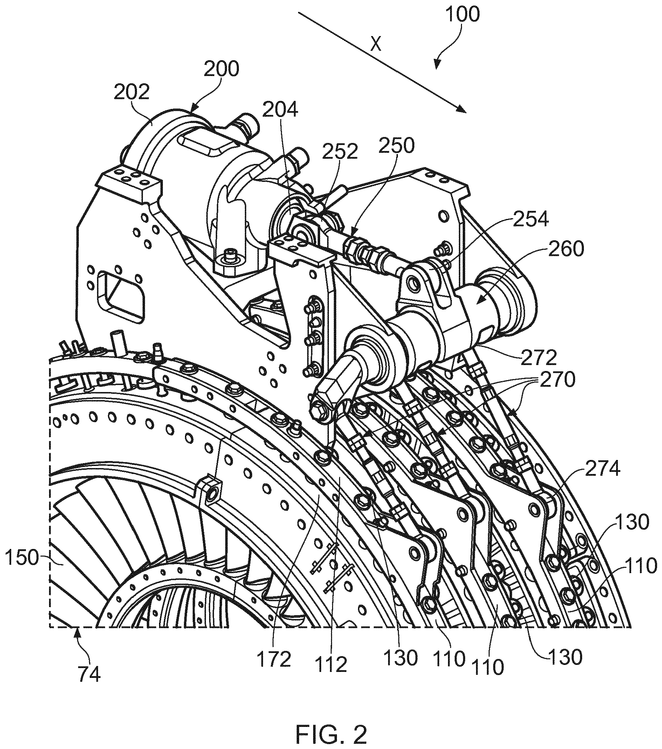

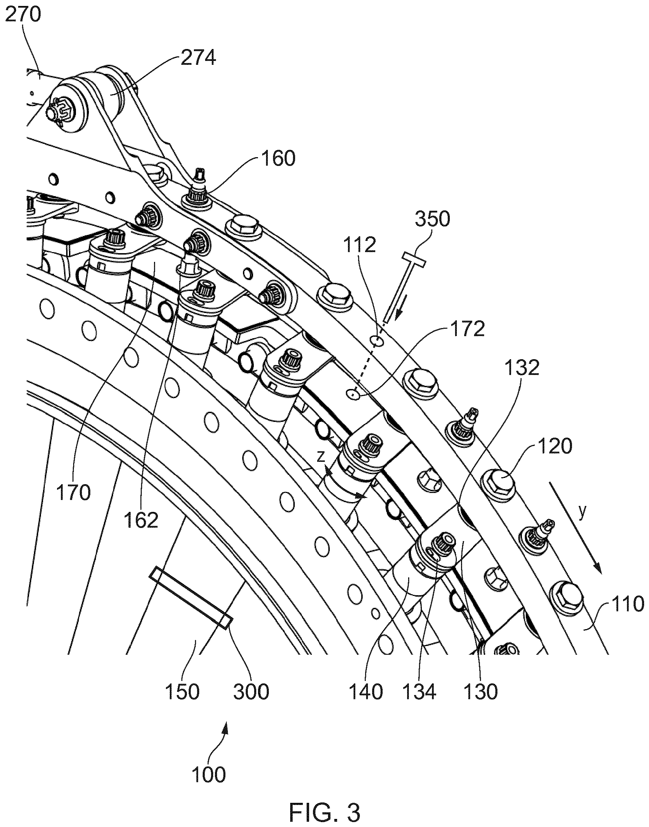

Figures 2 and 3 show a part of the variable vane arrangement 100 in greater detail. Figure 2 shows the variable vane arrangement 100 including three VSV rows 70, 72, 74, whereas Figure 3 shows one of the rows 70 in greater details. The variable vane arrangement 100 comprises variable stator vanes 150, which are part of a VSV row 70, 72, 74. The angle of the variable stator vanes 150 may be adjusted during use, for example according to a predetermined schedule which may be determined at least in part by the operating point and/or thrust demand of the engine 10 in which the VSVs 150 are installed.

In order to vary the angle of the stator vanes 150, an actuator 200 may be used, which may be a linear actuator as in the Figure 2 example. In the Figure 2 example, the actuator 200 is connected to the VSVs 150 via an adjustable connecting arrangement that comprises a control rod 250, a crankshaft 260, and a further control rod 270. The control rod 250 is rotatably attached at one end 252 to the actuator 200 (for example to an actuator ram 204 of the actuator 200, described below), and rotatably attached at the other end 254 to the crankshaft 260. The control rod 270 is adjustable in length, and is rotatably attached at one end 272 to the crankshaft 260, and rotatably attached at the other end 274 to a unison ring 110 (which may be referred to as a drive ring 110). Either one or both of the two control rods 250, 270 may be adjustable, for example adjustable in length, for example using a screw thread. Where the variable vane arrangement 100 controls more than one row 70, 72, 74 of VSVs (as in the Figure 2 example), the adjustable connecting arrangement may comprise one adjustable control rod 270 and one unison ring 110 for each row 70, 72, 74.

The actuator in the illustrated example comprises an actuator body 202 that is fixed to the main structure of the gas turbine engine 10 during assembly, and the actuator ram 204 (shown in the fully retracted position in Figure 2). In order to vary the angle of the VSVs 150, the actuator ram 204 is moved (for example, based on a control signal which may in turn be based on an engine operating condition and/or thrust demand) in the direction of an actuator axis X. Movement of the actuator ram in the direction of the actuator axis X causes the unison ring 110 to rotate about the axial direction 11 of the engine, in the Figure 2 and 3 example via the control rod 250, a crankshaft 260, and adjustable control rod 270, although it will be appreciated that other suitable arrangements could be used. In the Figure 2 and 3 example, linear movement X of the actuator 200 along the actuator direction may be said to be converted into circumferential movement Y of the unison ring 110 about the engine axis 11.

The unison ring 110 has at least one drive pin 120 connected thereto. The drive pin 120 is rigidly connected to the unison ring 110 such that the unison ring 110 and the drive pin 120 move together. The drive pin 120 is connected to a first end 132 of a lever 130. The first end 132 of the lever 130 therefore moves with the drive pin 120, but may rotate relative to it about a longitudinal axis of the drive pin 120.

A second end 134 of the lever 130 may be separated from the first end 132 in a direction that has at least a component (for example a major component) in the axial direction 11 of the engine 10. The second end 134 may be spaced from the first end 132 in a substantially axial direction 11 of the engine 10. The second end 134 of the lever 130 is connected (for example rigidly connected) to a VSV 150. The second end 134 may, for example, be connected to a spindle 140 that extends from a vane 150, as in the Figure 2 example. The second end 134 of the lever may be rigidly fixed in the axial, radial and circumferential directions of the engine 10, but may be rotatable about a radial direction, as indicated by the arrow Z in Figure 3.

Accordingly, the circumferential movement Y of the unison ring 110 (which may be described as rotation about the axial direction 11) may be converted into rotation Z of the vane 150 about a substantially radial direction of the engine 10. This may be achieved by the drive pin 120 and the lever 130.

In order to ensure that the VSV arrangement 100 is reliable (for example accurate and/or repeatable) the unison ring 110 must be kept concentric with the rest of the arrangement. In order to achieve this, one or more centralising pins 160 is provided. Each centralising pin 160 is in slidable contact with a guide surface, which may be part of a casing 170 within which the variable vanes 150 are housed. In use, the guide surface remains stationary, and the first end 162 of the centralising pin 160 slides across, and remains in contact with the guide surface. Accordingly, the position (for example at least the radial position) of the unison ring 110 relative to the casing 170 may be determined and/or maintained by the centralising pin 160. The casing 170 may be said to be rigidly attached to and/or an integral part of the gas turbine engine 10. Other arrangements in accordance with the present disclosure may have alternative mechanisms for keeping the unison ring 110 concentric with the rest of the arrangement.

In order to be able to accurately control the angle of the VSVs 150, the relationship between that angle and the actuator ram 204 extension must be known. This relationship may be set - for example on initial assembly, during engine testing, during service, or in a dedicated VSV adjustment procedure - using a procedure called rigging.

During rigging, the VSVs 150 may be initially disconnected from the actuator 200 (although in some arrangements this may not be necessary). For example, in the illustrated embodiment, one of the control rods 250, 270 (for example the adjustable control rod 270) may be loosened, or removed.

The desired angle (for example angle of incidence), of the VSVs may then be set to a known manner by aligning a rigging hole 112 in the unison ring 110 with a corresponding rigging hole 172, on the gas turbine engine structure, for example on the casing 170. Once the holes 112, 172 are aligned, a vane rigging pin 350 may be inserted (or passed) through (or into, depending on whether the hole is a through hole or a blind hole) the aligned holes, thereby fixing the circumferential position of the unison ring 110 and the casing 170 relative to each other. With the unison ring 110 fixed relative to the casing 170, the angle of incidence of the VSVs 150 should be fixed to a known value. If desired, an inclinometer 300 may be used to check the angle of the VSVs 150, but this may not be necessary.

The present disclosure allows the configuration of the ram 200, for example the position of the ram actuator 204 relative to the ram body 202, to be adjusted. Accordingly, with the VSVs 150 set to the desired angle (for example as described above, with the use of the vane rigging pin 350), the present disclosure allows the ram actuator 204 to take a number of different positions (or extensions) relative to the ram body 202. Each different position may be known, for example may be a known actuator ram 204 extension position.

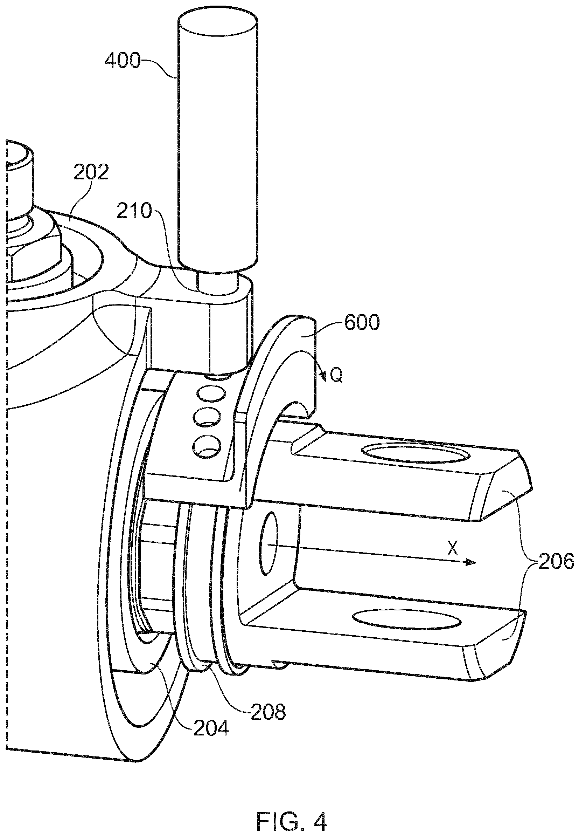

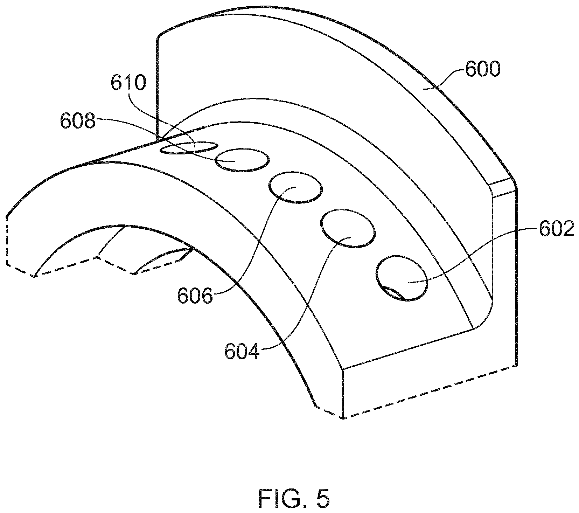

Figures 4 to 6 show an example of how such an adjustable rigging arrangement may be provided. In the illustrated arrangement, a rigging tool (or rigging collar) 600 is provided. The rigging tool 600 is shown in detail in Figure 5. The rigging tool 600 is provided with at least two rigging holes 602, 604, 606, 608, 610. During the rigging process, the rigging tool 600 is provided to the actuator ram 204 so as to be constrained (or fixed) relative to the actuator ram 204 in the direction of the actuator axis X, but moveable around the actuator ram in a direction that may be described as a circumferential direction Q around the actuator axis X. This may be achieved in any suitable manner, for example by engaging a ridge (or protrusion) on one component (for example the ridge 620 on the rigging tool 600) with a corresponding slot (for example the slot 208 in the actuator ram 204) on the other component.

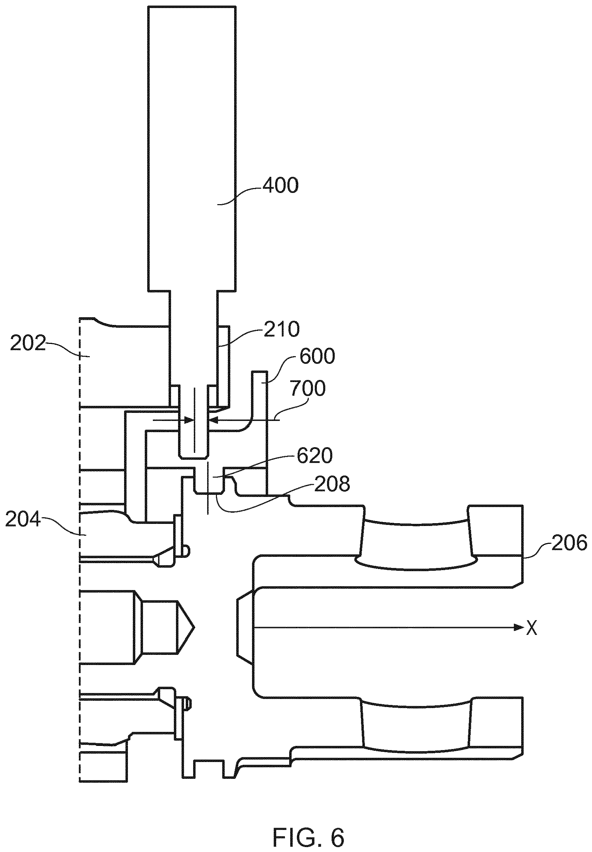

The holes 602-610 are offset from each other, in order to provide the adjustment during rigging. When provided to the actuator, as shown in Figures 4 and 6, for example, each hole is offset from the other holes in the direction of the actuator axis X. When provided to the actuator, as shown in Figures 4 and 6, for example, each hole is offset from the other holes in the circumferential direction Q around the actuator axis X.

In the illustrated example, the actuator body 202 is provided with a rigging hole 210 that is in a fixed position. In the rigging process, the fixed rigging hole 210 is aligned with one of the moveable rigging holes 602-610. This may be achieved by sliding the rigging tool circumferentially about the actuator axis X around the actuator ram 204 in order to achieve circumferential alignment, and sliding the actuator ram 204 along the actuator axis X in order to achieve alignment in the direction of the actuator axis X. Because each of the rigging holes 602-610 in the rigging tool 600 is offset relative to the others in the direction of the actuator axis X, the position of the actuator ram 204 relative to the actuator body 202 in the direction of the actuator axis X (and thus to a fixed structure of the gas turbine engine 10) is determined by which of the rigging holes 602-610 is aligned with the fixed rigging hole 210 in the actuator body 202. Accordingly, the rigging position of the actuator ram 204 may be adjusted by changing which rigging holes 210, 602-610 are aligned. Because the position of each of the rigging holes 602-610 in the rigging tool 600 is known in the direction of the actuator axis (for example relative to a face of the rigging tool and/or relative to the location feature (such as the ridge 620) of the rigging tool 600, such distance being indicated by reference numeral 700 in Figure 6), the precise position of the actuator ram 204 relative to the actuator body 202 is known for each of the possible rigging positions.

Once the desired rigging holes have been aligned (for example based on an actuator ram 204 extension that is desired to correspond to the VSV 150 angle set, for example, using the vane rigging pin 350 as described elsewhere herein), their relative position can be fixed using a rigging pin (which may be referred to as an actuator rigging pin) 400. As shown most clearly in Figure 6, the rigging pin 400 passes through the fixed rigging hole 210 in the actuator body 200 and into the aligned hole 602-610 in the rigging tool 600.

With the actuator ram 204 fixed in the desired position relative to the actuator body 202 (for example to fix the actuator ram 204 extension as desired) and the VSVs set to the desired angle, the actuator ram 204 may be connected to the VSVs, for example using the adjustable connecting arrangement 250, 260, 270. This may involve, for example, adjusting the length of one of the control rods 250, 270 (either or both of which may be adjustable in length) and connecting its ends to the respective adjoining components. By way of further non-limitative example, adjusting the adjustable connecting arrangement 250, 260, 270 may mean selecting one of a set of control rods 250, 270 of known lengths, depending on the rigging holes 210, 602-610 that are aligned. Purely by way of example, a clevis pin arrangement (a part of which is labelled 206 in Figure 6) may be used to rotatably connect a control rod 250, 270 to its respective adjoining components.

Once the actuator 200 and VSVs 150 have been re-connected, the rigging pins 350, 400 may be removed, along with the rigging tool 600. The angular position of the VSVs 150 can then be controlled by the extension of the actuator ram 204, as usual.

Although the example described in relation to Figures 4 to 6 comprises a rigging tool 600 that is connected (for example removably connected) to the actuator ram 204 during rigging, it will be appreciated that other arrangements are possible within the scope of the present disclosure. For example the offset rigging holes 602-610 may be provided as part of (or integral to) the actuator ram 204 and/or may be permanently attached to the actuator ram 204, such that the removable tool 600 is not required.

Additionally or alternatively, a set of rigging holes that are offset from each other in at least the direction of the actuator axis may be provided to the actuator body 202 in addition to or as an alternative to the offset rigging holes 602-610 provided to the actuator ram 204 in the example described in relation to Figures 4 to 6. Where such offset rigging holes are provided to the actuator body 202, they may be provided, for example, in the form of a tool (which may be similar to the rigging tool 600 described herein) or they may be integral with the actuator body 202. In arrangements having multiple offset rigging holes provided to the actuator body 202, one or more than one rigging hole may be available on the actuator ram 204, for example through a tool or integral with the actuator ram 204.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method of rigging a variable stator vane arrangement (100) for a gas turbine engine (10), the variable stator vane arrangement comprising:
an actuator (200) comprising an actuator body (202) and an actuator ram (204), the actuator ram being moveable relative to the actuator body along an actuator axis (X);
an array (70/72/74) of variable stator vanes (150); and
an adjustable connecting arrangement (250, 260, 270, 110, 130) that, once adjusted, fixedly connects the actuator ram to the variable stator vanes such that the angle of incidence of the variable stator vanes is dependent on the position of the actuator ram along the actuator axis, **characterized in that**: each of the actuator body and the actuator ram comprises at least one rigging hole (602-610, 210), with at least one of the actuator body and the actuator ram comprising at least two rigging holes that are offset from each other in the direction of the actuator axis, the method comprising:
aligning an actuator ram rigging hole (602-610) with an actuator body rigging hole (210);
inserting a rigging pin (400) through the aligned actuator ram rigging hole and actuator body rigging hole so as to set a rigging position of the actuator ram;
setting the angle of incidence of the variable stator vanes to a rigging angle; and
adjusting the adjustable connecting arrangement so as to fixedly connect the actuator ram at the rigging position to the variable stator vanes at the rigging angle.

2. The method according to claim 1, wherein the rigging holes (602-610) in the at least one of the actuator body (202) and the actuator ram (204) that comprises at least two rigging holes are circumferentially offset from each other about the actuator axis (X); and
the rigging holes (210, 602-610) of the actuator body and the rigging holes of the actuator ram (210, 602-610) are circumferentially moveable relative to each other about the actuator axis in the step of aligning an actuator ram rigging hole with an actuator body rigging hole.

3. The method according to claim 1 or claim 2, wherein:
the respective centrelines of the rigging holes in the at least one of the actuator body (202) and the actuator ram (204) that comprises at least two rigging holes (602-610) are offset from each other in the direction of the actuator axis (X) by less than the width of the holes; and/or
the rigging hole or holes (602-610) in one of the actuator ram (204) or actuator body (202) is/are provided in the form of a rigging tool (600); and/or
the rigging hole or holes (210) in one of the actuator ram (204) or actuator body (202) is/are integral to the rest of the respective component; and/or

4. The method according to any one of the preceding claims, wherein the or each actuator ram rigging hole (602-610) is provided in the form of an actuator ram rigging tool (600).

5. The method according to claim 4, wherein:
the actuator ram rigging tool (600) is circumferentially moveable relative to the actuator ram (204) about the actuator axis (X); and
the step of aligning an actuator ram rigging hole (602-610) with an actuator body rigging hole (210) comprises moving the actuator ram rigging tool circumferentially about the actuator axis.

6. The method according to claim 5, wherein:
one of the actuator ram rigging tool (600) and the actuator ram (204) is provided with a circumferentially extending groove (208), and the other of the actuator ram rigging tool and the actuator ram is provided with a circumferentially extending ridge (620) that is received by the circumferentially extending groove; and
the step of aligning an actuator ram rigging hole with an actuator body rigging hole comprises moving the circumferentially extending ridge within the circumferentially extending groove.

7. The method according to any one of claims 4 to 6, wherein the actuator ram rigging tool (600) comprises at least two rigging holes (602-610), each rigging hole being circumferentially and axially offset from the others relative to the actuator axis (X).

8. The method according to any one of claims 4 to 7, further comprising removing the actuator ram rigging tool (400) from the actuator ram (204) after fixedly connecting the actuator ram (204) to the variable stator vanes (150).

9. A method according to any one of the preceding claims, wherein the adjustable connecting arrangement comprises:
an adjustable length control rod (270);
a unison ring (110); and
a plurality of vane levers (130), wherein:
the adjustable control rod is connected between the actuator ram (204) and the unison ring (110) to convert linear movement of the actuator ram into rotational movement of the unison ring;
a vane lever is connected between the unison ring and each variable vane (150) to convert rotational movement of the unison ring into rotation of the vane about a substantially perpendicular axis; and
the step of adjusting the adjustable connecting arrangement comprises adjusting and setting the length of the adjustable length control rod (270) such that subsequent movement of the actuator ram results in a change in incidence angle of the variable vanes.

10. A method of assembling a variable stator vane stage of a gas turbine engine comprising:
providing the actuator (200), array of variable stator vanes (150), and adjustable connecting arrangement (250, 260, 270, 110, 130) of any one of the preceding claims; and
performing the method of rigging the variable stator vane arrangement (100) according to any one of the preceding claims.

11. A method of manufacturing a gas turbine engine (10) comprises a variable stator vane stage, the method comprising rigging the variable stator vanes (150) using the rigging method according to any one of claims 1 to 10.

12. An actuator for controlling the angle of incidence of a set of variable stator vanes (150), comprising:
an actuator body (202); and
an actuator ram (204), the actuator ram being moveable relative to the actuator body along an actuator axis (X), **characterized in that**:
each of the actuator body and the actuator ram comprises at least one rigging hole (210, 602-610); and
at least one of the actuator body and the actuator ram comprises at least two rigging holes (602-610) that are offset from each other in the direction of the actuator axis and are each capable of being aligned with the rigging hole(s) (210) of the other of the actuator ram or actuator body so as to be able to insert a rigging pin (400) through the aligned holes to set the position of the actuator ram relative to the actuator body along the actuator axis.

13. A variable stator vane arrangement (100) comprising:
an array (70/72/74) of variable stator vanes (150);
an actuator according to claim 12; and
an adjustable connecting arrangement (250, 260, 270, 110, 130) that, once adjusted, fixedly connects the actuator ram (204) to the variable stator vanes such that the angle of incidence of the variable stator vanes is dependent on the position of the actuator ram along the actuator axis (X).

14. A rigging tool (600) for use in rigging a variable stator vane stage of a gas turbine engine, the rigging tool comprising:
a locating portion (620) for removably locating the rigging tool onto an actuator (200) of a gas turbine engine; and
at least one rigging hole (602-610) that is capable of being aligned with at least one corresponding rigging hole (210) on the actuator, wherein:
the locating portion allows the rigging tool to be moved relative to the rest of the actuator once it has been located onto the actuator, so as to enable at least two sets of rigging holes to be aligned, each set of holes corresponding to a different actuator position.

15. A rigging tool (600) according to claim 14, wherein:
the locating portion (620) is a circumferentially extending groove or ridge arranged to be received by a corresponding circumferentially extending groove or ridge (208) in an actuator ram (204) of the actuator (200);
the rigging tool comprises at least two rigging holes (602-610), the centrelines of each of the rigging holes being offset by different distances (700) from the circumferentially extending groove or ridge in the rigging tool, and wherein,
optionally:
the centrelines of each of the rigging holes (602-610) are offset from each other in the direction of the circumferentially extending groove or ridge (620) by at least the width of the rigging holes.

## Patentansprüche

1. Verfahren zum Aufrüsten einer verstellbaren Statorschaufelanordnung (100) für einen Gasturbinenmotor (10), wobei die verstellbare Statorschaufelanordnung umfasst:
einen Stellantrieb (200), der einen Stellantriebskörper (202) und einen Stellantriebsstößel (204) umfasst, wobei der Stellantriebsstößel bezogen auf den Stellantriebskörper entlang einer Stellantriebsachse (X) beweglich ist;
eine Gruppe (70/72/74) verstellbarer Statorschaufeln (150); und
eine einstellbare Verbindungsanordnung (250, 260, 270, 110, 130), die, wenn sie einmal eingestellt ist, den Stellantriebsstößel so mit den verstellbaren Statorschaufeln fest verbindet, dass der Einfallswinkel der verstellbaren Statorschaufeln von der Stellung des Stellantriebsstößels entlang der Stellantriebsachse abhängt, **dadurch gekennzeichnet, dass**:
sowohl der Stellantriebskörper als auch der Stellantriebsstößel mindestens ein Aufrüstloch (602-610, 210) umfasst, wobei mindestens einer sowohl des Stellantriebskörpers als auch des Stellantriebsstößels mindestens zwei Aufrüstlöcher umfasst, die in der Richtung der Stellantriebsachse voneinander versetzt sind, wobei das Verfahren umfasst:
ein Ausrichten eines Aufrüstlochs des Stellantriebsstößels (602-610) mit einem Aufrüstloch (210) des Stellantriebskörpers;
ein Einsetzen eines Aufrüststifts (400) durch das ausgerichtete Aufrüstloch des Stellantriebsstößels und Aufrüstloch des Stellantriebskörpers, um eine Aufrüststellung des Stellantriebsstößels einzustellen;
ein Einrichten des Einfallswinkels der verstellbaren Statorschaufeln auf einen Aufrüstwinkel; und
ein Einstellen der einstellbaren Verbindungsanordnung, um den Stellantriebsstößel in der Aufrüststellung mit den verstellbaren Statorschaufeln bei dem Aufrüstwinkel fest zu verbinden.

2. Verfahren nach Anspruch 1, wobei die Aufrüstlöcher (602-610) in mindestens entweder dem Stellantriebskörper (202) oder dem Stellantriebsstößel (204), der mindestens zwei Aufrüstlöcher umfasst, um die Stellantriebsachse (X) umlaufend voneinander versetzt sind; und
die Aufrüstlöcher (210, 602-610) des Stellantriebskörpers und die Aufrüstlöcher des Stellantriebsstößels (210, 602-610) in dem Schritt des Ausrichtens eines Aufrüstlochs des Stellantriebsstößels mit einem Aufrüstloch des Stellantriebskörpers um die Stellantriebsachse umlaufend relativ zueinander beweglich sind.

3. Verfahren nach Anspruch 1 oder Anspruch 2, wobei:
die jeweiligen Mittellinien der Aufrüstlöcher in mindestens einem von dem Stellantriebskörper (202) und dem Stellantriebsstößel (204), der mindestens zwei Aufrüstlöcher (602-610) umfasst, in der Richtung der Stellantriebsachse (X) um weniger als die Breite der Löcher voneinander versetzt sind; und/oder
das Aufrüstloch oder die -löcher (602-610) in entweder dem Stellantriebsstößel (204) oder Stellantriebskörper (202) in der Form eines Aufrüstwerkzeugs (600) bereitgestellt wird/werden; und/oder
das Aufrüstloch oder die -löcher (210) in entweder dem Stellantriebsstößel (204) oder Stellantriebskörper (202) mit dem Rest der jeweiligen Komponente aus einem Stück ist/sind.

4. Verfahren nach einem der vorhergehenden Ansprüche, wobei das oder jedes Aufrüstloch (602-610) des Stellantriebsstößels in der Form eines Aufrüstwerkzeugs (600) für Stellantriebsstößel bereitgestellt wird.

5. Verfahren nach Anspruch 4, wobei:
das Aufrüstwerkzeug (600) des Stellantriebsstößels bezogen auf den Stellantriebsstößel (204) um die Stellantriebsachse (X) umlaufend beweglich ist; und
der Schritt des Ausrichtens eines Aufrüstlochs (602-610) des Stellantriebsstößels mit einem Aufrüstloch (210) des Stellantriebskörpers ein Bewegen des Aufrüstwerkzeugs des Stellantriebsstößels umlaufend um die Stellantriebsachse umfasst.

6. Verfahren nach Anspruch 5, wobei:
entweder das Aufrüstwerkzeug (600) des Stellantriebsstößels und der Stellantriebsstößel (204) mit einer sich umlaufend erstreckenden Nut (208) bereitgestellt wird, oder das andere des Aufrüstwerkzeugs des Stellantriebsstößels und des Stellantriebsstößels mit einer sich umlaufend erstreckenden Wulst (620) bereitgestellt wird, die durch die sich umlaufend erstreckende Nut aufgenommen wird; und
der Schritt des Ausrichtens eines Aufrüstlochs des Stellantriebsstößels mit einem Aufrüstloch des Stellantriebskörpers ein Bewegen der sich umlaufend erstreckenden Wulst innerhalb der sich umlaufend erstreckenden Nut umfasst.

7. Verfahren nach einem der Ansprüche 4 bis 6, wobei das Aufrüstwerkzeug (600) des Stellantriebsstößels mindestens zwei Aufrüstlöcher (602-610) umfasst, wobei jedes Aufrüstloch bezogen auf die Stellantriebsachse (X) umlaufend und axial von den anderen versetzt ist.

8. Verfahren nach einem der Ansprüche 4 bis 7, das des Weiteren ein Entfernen des Aufrüstwerkzeugs (400) des Stellantriebsstößels von dem Stellantriebsstößel (204) nach dem festen Verbinden des Stellantriebsstößels (204) mit den verstellbaren Statorschaufeln (150) umfasst.

9. Verfahren nach einem der vorhergehenden Ansprüche, wobei die einstellbare Verbindungsanordnung umfasst:
eine längeneinstellbare Steuerstange (270);
einen Gleichlaufring (110); und
eine Vielzahl von Schaufelhebeln (130), wobei:
die einstellbare Steuerstange zwischen dem Stellantriebsstößel (204) und dem Gleichlaufring (110) verbunden wird, um eine lineare Bewegung des Stellantriebsstößels in eine Drehbewegung des Gleichlaufrings umzuwandeln;
ein Schaufelhebel zwischen dem Gleichlaufring und jeder verstellbaren Schaufel (150) verbunden wird, um eine Drehbewegung des Gleichlaufrings in eine Drehung der Schaufel um eine im Wesentlichen senkrechte Achse umzuwandeln; und
der Schritt eines Einstellens der einstellbaren Verbindungsanordnung ein Einstellen und Einrichten der Länge der längeneinstellbaren Steuerstange (270) umfasst, sodass nachfolgend eine Bewegung des Stellantriebsstößels zu einer Änderung im Einfallswinkel der verstellbaren Schaufeln führt.

10. Verfahren zum Zusammenbauen einer Stufe einer verstellbaren Statorschaufel eines Gasturbinenmotors, das umfasst:
ein Bereitstellen des Stellantriebs (200), der Gruppe von verstellbaren Statorschaufeln (150) und der einstellbaren Verbindungsanordnung (250, 260, 270, 110, 130) nach einem der vorhergehenden Ansprüche; und
ein Ausführen des Verfahrens zum Aufrüsten der verstellbaren Statorschaufelanordnung (100) nach einem der vorhergehenden Ansprüche.

11. Verfahren zum Herstellen eines Gasturbinenmotors (10), das eine Stufe der verstellbaren Statorschaufel umfasst, wobei das Verfahren ein Aufrüsten der verstellbaren Statorschaufeln (150) durch Verwenden des Aufrüstverfahrens nach einem der Ansprüche 1 bis 10 umfasst.

12. Stellantrieb zum Steuern des Einfallswinkels eines Satzes von verstellbaren Statorschaufeln (150), der umfasst:
einen Stellantriebskörper (202); und
einen Stellantriebsstößel (204), wobei der Stellantriebsstößel bezogen auf den Stellantriebskörper entlang einer Stellantriebsachse (X) beweglich ist, **dadurch gekennzeichnet, dass**:
sowohl der Stellantriebskörper als auch der Stellantriebsstößel mindestens ein Aufrüstloch (210, 602-610) umfasst; und
mindestens entweder der Stellantriebskörper oder der Stellantriebsstößel mindestens zwei Aufrüstlöcher (602-610) umfasst, die in der Richtung der Stellantriebsachse voneinander versetzt sind und jedes geeignet ist, mit dem Aufrüstloch bzw. den -löchern (210) des anderen des Stellantriebsstößels oder Stellantriebskörpers ausgerichtet zu werden, um in der Lage zu sein, einen Aufrüststift (400) durch die ausgerichteten Löcher einzusetzen, um die Stellung des Stellantriebsstößels bezogen auf den Stellantriebskörper entlang der Stellantriebsachse einzustellen.

13. Verstellbare Statorschaufelanordnung (100), die umfasst:
eine Gruppe (70/72/74) verstellbarer Statorschaufeln (150);
einen Stellantrieb nach Anspruch 12; und
eine einstellbare Verbindungsanordnung (250, 260, 270, 110, 130), die, wenn sie einmal eingestellt ist, den Stellantriebsstößel (204) so mit den verstellbaren Statorschaufeln fest verbindet, dass der Einfallswinkel der verstellbaren Statorschaufeln von der Stellung des Stellantriebsstößels entlang der Stellantriebsachse (X) abhängt.

14. Aufrüstwerkzeug (600) zur Verwendung beim Aufrüsten einer Stufe einer verstellbaren Statorschaufel eines Gasturbinenmotors, wobei das Aufrüstwerkzeug umfasst:
einen Fixierabschnitt (620) zum entfernbaren Fixieren des Aufrüstwerkzeugs auf einen Stellantrieb (200) eines Gasturbinenmotors; und
mindestens ein Aufrüstloch (602-610), das geeignet ist, mit mindestens einem entsprechenden Aufrüstloch (210) auf dem Stellantrieb ausgerichtet zu werden, wobei:
der Fixierabschnitt es dem Aufrüstwerkzeug ermöglicht, bezogen auf den Rest des Stellantriebs bewegt zu werden, nachdem es auf dem Stellantrieb festgelegt wurde, um mindestens zwei Sätzen von Aufrüstlöchern zu ermöglichen, ausgerichtet zu werden, wobei jeder Satz von Löchern einer anderen Stellantriebsstellung entspricht.

15. Aufrüstwerkzeug (600) nach Anspruch 14, wobei:
der Fixierabschnitt (620) eine sich umlaufend erstreckende Nut oder Wulst ist, die angeordnet wird, durch eine entsprechende sich umlaufend erstreckende Nut oder Wulst (208) in einem Stellantriebsstößel (204) des Stellantriebs (200) aufgenommen zu werden;
das Aufrüstwerkzeug mindestens zwei Aufrüstlöcher (602-610) umfasst, wobei die Mittellinien jedes der Aufrüstlöcher um unterschiedliche Abstände (700) von der sich umlaufend erstreckenden Nut oder Wulst in dem Aufrüstwerkzeug versetzt ist, und wobei wahlweise:
die Mittellinien jedes der Aufrüstlöcher (602-610) in der Richtung der sich umlaufend erstreckenden Nut oder Wulst (620) um mindestens die Breite der Aufrüstlöcher voneinander versetzt sind.

## Revendications

1. Méthode de montage d'un agencement d'aubes de stator variable (100) pour un moteur à turbine à gaz (10), l'agencement d'aubes de stator variables comprenant :
un actionneur (200) comprenant un corps d'actionneur (202) et un vérin d'actionnement (204), le vérin d'actionnement pouvant être déplacé relativement au corps d'actionneur le long d'un axe d'actionneur (X) ;
un réseau (70/72/74) d'aubes de stator variables (150) ; et
un agencement de connexion ajustable (250, 260, 270, 110, 130), qui, lorsqu'il a été ajusté, assure la connexion fixe du vérin d'actionnement aux aubes de stator variables, de sorte que l'angle d'incidence des aubes de stator variables soit tributaire de la position du vérin d'actionnement le long de l'axe d'actionneur,
**caractérisée en ce que** :
chacun du corps d'actionneur et du vérin d'actionnement comprend au moins un orifice d'agencement (602-610, 210), au moins un du corps d'actionneur et du vérin d'actionnement comprenant au moins deux orifices de montage décalés l'un de l'autre dans la direction de l'axe de l'actionneur, la méthode comprenant :
l'alignement d'un orifice de montage du vérin d'actionnement (602-610) avec un orifice de montage du corps d'actionneur (210) ;
l'insertion d'un axe de montage (400) à travers l'orifice de montage du vérin d'actionnement et l'orifice de montage du corps d'actionneur alignés, de façon à établir une position de montage du vérin d'actionnement ;
l'établissement de l'angle d'incidence des aubes de stator variables sur un angle de montage ; et
l'ajustage de l'agencement de connexion ajustable, afin de connecter fixement le vérin d'actionnement comprenant au moins deux orifices de montage décalés l'un de l'autre dans la direction à la position de montage sur les aubes de stator variables à l'angle de montage.

2. Méthode selon la revendication 1, les orifices de montage (602-610) dans l'au moins un du corps d'actionneur (202) et du vérin d'actionnement (204) comprenant au moins deux orifices de montage décalés de façon circonférentielle l'un par rapport à l'autre autour de l'axe d'actionneur (X) ; et
les orifices de montage (210, 602-610) du corps d'actionneur et les orifices de montage du vérin d'actionnement (210, 602-610) pouvant être déplacés de façon circonférentielle l'un par rapport à l'autre autour de l'axe d'actionneur à l'étape d'alignement d'un orifice de montage du vérin d'actionnement avec un orifice de montage du corps d'actionneur.

3. Méthode selon la revendication 1 ou la revendication 2, dans laquelle :
les axes respectifs des orifices de montage dans l'au moins un du corps d'actionneur (202) et du vérin d'actionnement (204) comprenant au moins deux orifices de montage (602-610) étant décalés l'un de l'autre dans la direction de l'axe d'actionneur (X) d'une distance inférieure à la largeur des orifices ; et/ou
le ou les orifices de (602-610) montage dans un du vérin d'actionnement (204) ou du corps d'actionneur (202) étant fourni(s) sous forme d'un outil de montage (600) ; et/ou
le ou les orifices de montage (210) dans un du vérin d'actionnement (204) ou du corps d'actionneur (202) faisant partie intégrante du restant du composant respectif.

4. Méthode selon une quelconque des revendications précédentes, le ou chaque orifice de montage du vérin d'actionnement (602-610) se présentant sous forme d'un outil de montage de vérin d'actionnement (600).

5. Méthode selon la revendication 4, dans laquelle :
l'outil de montage du vérin d'actionnement (600) peut être déplacé de façon circonférentielle relativement au vérin d'actionnement (204) autour de l'axe d'actionneur (X) ; et
l'étape d'alignement d'un orifice de montage du vérin d'actionnement (602-610) avec un orifice de montage du vérin d'actionnement (210) comprend le déplacement de l'outil de montage du vérin d'actionnement de façon circonférentielle autour de l'axe d'actionneur.

6. Méthode selon la revendication 5, dans laquelle :
un de l'outil de montage du vérin d'actionnement (600) et du vérin d'actionnement (204) est doté d'une cannelure s'étendant de façon circonférentielle (208), l'autre de l'outil de montage du vérin d'actionnement et du vérin d'actionnement est doté d'une crête s'étendant de façon circonférentielle (620), qui s'introduit dans la cannelure s'étendant de façon circonférentielle ; et
l'étape d'alignement d'un orifice de montage du vérin d'actionnement avec un orifice de montage du corps d'actionneur comprend le déplacement de la crête s'étendant de façon circonférentielle dans la cannelure s'étendant de façon circonférentielle.

7. Méthode selon une quelconque des revendications 4 à 6, l'outil de montage du vérin d'actionnement (600) comprenant au moins deux orifices de montage (602-610), chaque orifice de montage étant décalé de façon circonférentielle et axiale des autres relativement à l'axe d'actionneur (X).

8. Méthode selon une quelconque des revendications 4 à 7, comprenant en outre l'enlèvement, du vérin d'actionnement (204), de l'axe de montage (400) du vérin d'actionnement après le raccordement fixe du vérin d'actionnement (204) aux aubes de stator variables (150).

9. Méthode selon une quelconque des revendications précédentes, l'agencement de raccordement ajustable comprenant :
une tige de commande à longueur ajustable (270) ;
un anneau de conjugaison (110) ; et
une pluralité de leviers d'aube (130), dans lequel
la tige de commande ajustable est connectée entre le vérin d'actionnement (204) et l'anneau de conjugaison (110) pour convertir un mouvement linéaire du vérin d'actionnement en mouvement rotatif de l'anneau de conjugaison ;
un levier d'aube est connecté entre l'anneau de conjugaison et chaque aube variable (150) pour convertir le mouvement rotatif de l'anneau de conjugaison en rotation de l'aube autour d'un axe substantiellement perpendiculaire ; et
l'étape d'ajustage de l'agencement de raccordement ajustable comprend l'ajustage et l'établissement de la longueur de la tige de commande à longueur ajustable (270), de sorte que tout mouvement ultérieur du vérin d'actionnement engendre une variation de l'angle d'incidence des aubes variables.

10. Méthode d'assemblage d'un étage d'aubes de stator variables d'un moteur à turbine à gaz, comprenant :
la mise en place de l'actionneur (200), d'un réseau d'aubes de stator variables (150), et d'un agencement de connexion ajustable (250, 260, 270, 110, 130), selon une quelconque des revendications précédentes ; et
l'exécution de la méthode de montage de l'agencement d'aube de stator variable (100) selon une quelconque des revendications précédentes.

11. Méthode de fabrication d'un moteur à turbine à gaz (10) comprenant un étage d'aubes de stator variables, la méthode comprenant le montage des aubes de stator variables (150) en utilisant la méthode de montage selon une quelconque des revendications 1 à 10.

12. Actionneur pour contrôler l'angle d'incidence d'un ensemble d'aubes de stator variables (150) comprenant :
un corps d'actionneur (202) ; et
un vérin d'actionnement (204), le vérin d'actionnement pouvant être déplacé relativement au corps d'actionneur le long d'un axe d'actionneur (X) ;
**caractérisé en ce que** :
chacun du corps d'actionneur et du vérin d'actionnement comprend au moins un orifice de montage (210, 602-610) ; et
au moins un du corps d'actionneur et du vérin d'actionnement comprend au moins deux orifices de montage (602-610) décalés l'un de l'autre dans la direction de l'axe de l'actionneur, et chacun pouvant être aligné avec les orifices de montage (210) de l'autre du corps d'actionneur et du vérin d'actionnement, de façon à pouvoir insérer un axe de montage (400) à travers les orifice alignés, afin de régler la position du vérin d'actionnement relativement au corps d'actionneur le long de l'axe de l'actionneur.

13. Agencement d'aubes de stator variable (100) comprenant :
un réseau (70/72/74) d'aubes de stator variables (150) ;
un actionneur selon la revendication 12 ; et
un agencement de connexion ajustable (250, 260, 270, 110, 130), qui, lorsqu'il a été ajusté, assure la connexion fixe du vérin d'actionnement (204) aux aubes de stator variables, de sorte que l'angle d'incidence des aubes de stator variables soit tributaire de la position du vérin d'actionnement le long de l'axe d'actionneur (X).

14. Outil de montage (600) utilisé pour le montage d'un étage d'aubes de stator variables d'un moteur à turbine à gaz, l'outil de montage comprenant :
une partie de positionnement (620) pour le positionnement de façon amovible de l'outil de montage sur un actionneur (200) d'un moteur à turbine à gaz ; et
au moins un orifice de montage (602-610) pouvant être aligné avec au moins un orifice de montage correspondant (210) sur l'actionneur, dans lequel :
la partie de positionnement permet le déplacement de l'outil de montage relativement au reste de l'actionneur lorsqu'il a été positionné sur l'actionneur, de façon à permettre l'alignement d'au moins deux jeux d'orifices de montage, chaque jeu d'orifices correspondant à une position diverse de l'actionneur.

15. Outil de montage (600) selon la revendication 14,
la partie de positionnement (620) étant une cannelure ou une crête s'étendant de façon circonférentielle, agencée pour être reçue par une cannelure ou une crête s'étendant de façon circonférentielle correspondante (208) dans un vérin d'actionnement (204) de l'actionneur (200) ;
l'outil de montage comprenant au moins deux orifices de montage (602-610), les axes de chacun des orifices de montage étant décalés de différentes distances (700) de la cannelure ou la crête s'étendant de façon circonférentielle dans l'outil de montage, et, en option, dans lequel
les axes de chacun des orifices de montage (602-610) étant décalés l'un de l'autre, dans la direction de la cannelure ou une crête s'étendant de façon circonférentielle (620), d'au moins la largeur des orifices de montage.
